(19) Europäisches Patentamt / European Patent Office / Office européen des brevets

(11) **EP 2 075 953 B1**

(12) **EUROPEAN PATENT SPECIFICATION**

(45) Date of publication and mention
of the grant of the patent:
**16.05.2012 Bulletin 2012/20**

(51) Int Cl.:
*H04L 12/24* (2006.01)     *H04L 12/26* (2006.01)
*H04L 29/06* (2006.01)

(21) Application number: **07301712.1**

(22) Date of filing: **20.12.2007**

(54) **Method for testing network performances with low impact on existing network traffic and associated apparatus**

Verfahren zum Testen von Netzwerkleistungen mit geringer Auswirkung auf vorhandenen Netzwerkverkehr und entsprechende Vorrichtung

Procédé pour tester les performances d'un réseau avec un faible impact sur le trafic existant dans le réseau et appareil correspondant

(84) Designated Contracting States:
**DE FR GB**

(43) Date of publication of application:
**01.07.2009 Bulletin 2009/27**

(73) Proprietor: **Thomson Licensing
92130 Issy-les-Moulineaux (FR)**

(72) Inventors:
• **Andreas, Matthias
30177 Hannover (DE)**
• **Glaeser, Frank
30449 Hannover (DE)**
• **Brocke, Jens
30880 Laatzen (DE)**

• **Kubsch, Stefan
31559 Hohnhorst (DE)**
• **Koehler. Ralf
30455 Hannover (DE)**
• **Siemens, Eduard
31319 Sehnde (DE)**

(74) Representative: **Ruellan-Lemonnier, Brigitte
Technicolor
1-5 rue Jeanne d'Arc
92130 Issy-les-Moulineaux (FR)**

(56) References cited:
**EP-A- 1 748 623     US-A1- 2006 251 116**

**Description**

**Field Of The Invention**

The invention concerns a method of evaluating network performances with low impact on existing network traffic. Furthermore, the invention also relates to an apparatus for evaluating network performances.

**Background Of The Invention**

In networks, frequent configuration changes and component failures take place. Those changes and failures have significant impact on the performance (e.g., throughput, jitter, delay, etc.) of certain links or entire paths of the network. In order to ensure correct network behaviour and configuration and to discover possible problems, it is necessary to be able to monitor frequently the status of the network and conduct certain tests on network traffic, for example with at least a daily frequency.

Monitoring and testing should happen with the least possible impact on the payload traffic within the network. Especially network traffic with certain reserved Quality of Service (QoS), e.g. with a minimum guaranteed bandwidth, should not be affected by tests.

In the state of the Art, solutions exist for automated testing and measuring of network performances. Usually, these solutions are based on a fixed schedule of test runs chosen to find the network in a state with low traffic or with no traffic (e.g., during night-time). But in some business environments like film or video post-production facilities, rush-hour traffic can be observed at arbitrary time of day. Normal operation during daytime and rendering or copying jobs that are scheduled to run during the night might keep the network busy the whole day. So, there is no predictable global "low traffic" period of time during which a test can be run. An open source project called ANEMOS (acronym of "An Autonomous NEtwork Monitoring System") is an example of such a monitoring framework implementation. Unfortunately, it presents the aforementioned drawbacks in certain specific business environments such as film or video post-production.

Modern computing and networking environments like those found in film and video post-production facilities are globally kept busy 24 hours per day, 7 days per week. So it is hard to plan a test tasks schedule corresponding to time period where network utilization is low. But production applications often do not need the whole maximum available bandwidth simultaneously on all network paths. In fact, these applications might need the maximum available bandwidth on a certain path in rare and short but unplanned period of time. For this reason it is not possible to check without regular testing if a connection works the way it should, for example to determine if the theoretical maximum bandwidth can be achieved on a particular path.

One of the goals of the present invention is to provide a way to find a period of time during which network performance measurements can be achieved without disturbing payload traffic on certain connection or on entire paths.

EP-A-1 748 623 (AVAYA TECH LLC) 31 January 2007 deals with a method for measuring admission control for VoIP traffic in IP based network. The method configures specific passive, active on-demand and active-continual control stats for performance measurements on the network.

US 2006/251116 A1 (BEDINGFIELD JAMES C SR ET AL) 9 November 2006 deals with identifying bandwidth issues that affect the quality of service and to optimize the service.

**Summary Of The Invention**

The technical problem that present invention intends to solve is determining a period of time during which network performance measurements can be achieved without disturbing payload traffic on certain connection or on entire paths.

The network is for instance a high speed IP based network or an Infiniband protocol based network.

The invention resides in a method, as defined in claim 1, for evaluating network performance by running tests on network performances during normal operation of the network. The network comprises links connecting nodes, the link Ljk connecting the two nodes Nj, Nk. According to the invention, the method has low impact on normal operation traffic in the network.

The invention also concerns an apparatus, as defined in claim 10, for evaluating network performances by running tests on network performances during normal operation of the network. The network comprises links connecting nodes, the link Ljk connecting the two nodes Nj, Nk, applications running on the nodes. According to the invention, the apparatus comprises means for determining a couple <Ti, Ljk> where Ti identifies an off-time period with low traffic on the link Ljk.

Preferentially, the method according to the invention involves a step of determination of a couple <Ti, Ljk> where Ti identifies a time period with low traffic on the link Ljk.

Preferentially, the method according to the invention involves a further step of measuring network performances on the link Ljk, during the time periods Ti.

According to a first embodiment, the determination of the couple <Ti, Ljk> is based on a comparison between a network traffic activity measurement on link Ljk and statistical characteristics concerning network traffic on link Ljk.

According to a second embodiment, the determination of the couple <Ti, Ljk> is based on achievement of conditions on monitored data.

A first advantage of the invention is that it allows running tests on network performances during normal operations. That means, performance tests do not require to be scheduled a priori. They are run on a link Ljk during a period of time Ti determined in order to not disturbing for current traffic on the link Ljk.

A second advantage of the invention comes from a particular implementation of the test daemons on the network nodes which enables to run performance tests with low impact on the CPU utilization of the hosts. This is a particularly remarkable advantage for high speed networks like 10Gbit Ethernet or for Infiniband networks.

A third advantage of the invention is: performances tests can take into account additional information communicated by applications running on the hosts different from test daemons. This additional information can also be injected into the test controller or into test daemons to improve knowledge of network performance.

## Brief Description Of The Drawings

Embodiments of the invention are described in text form hereafter and are illustrated with drawings, which show in:

Figure 1 : a wide area network including an apparatus for evaluating network performances according to a first embodiment of the invention;
Figures 2a : a typical temporal evolution of used bandwidth corresponding to a "conventional" network;
Figures 2b : a typical bandwidth temporal evolution corresponding to a video-production oriented network;
Figure 3 : a typical cumulative distribution function F(t) over time ;
Figures 4a, 4b, 4c : the influence of working point position for constant performance test duration.

## Detailed Description Of Preferred Embodiments

Preferentially, the apparatus according to the invention comprises means for measuring network performances on a network link $L_{jk}$, during the time periods $T_i$.

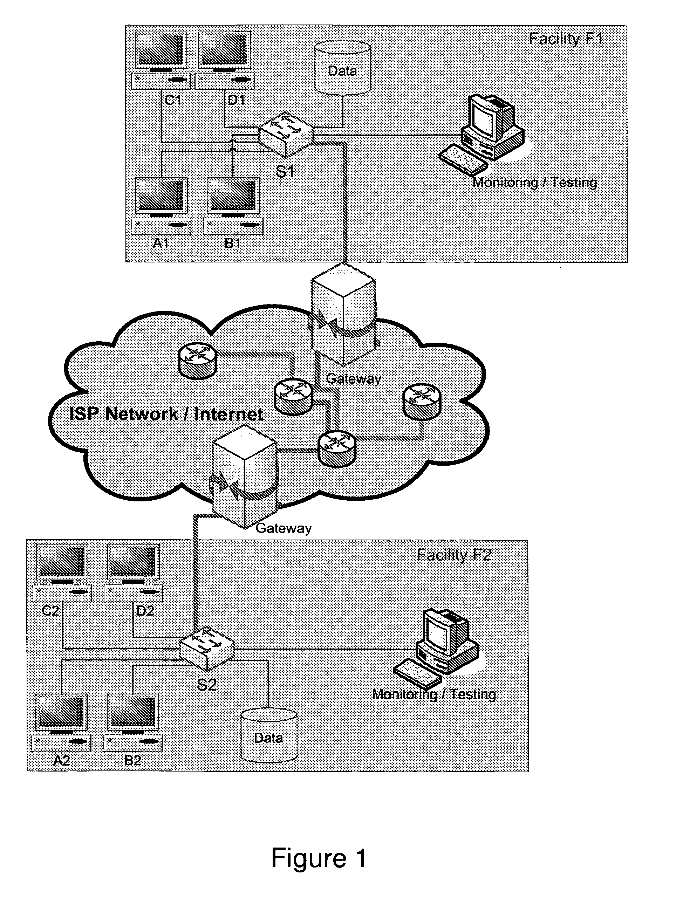

Figure 1 illustrates a wide area network (WAN), connecting two facilities F1, F2. In each facility, a local area network (LAN) includes four different hosts A1, B1, C1, D1, A2, B2, C2, D2.

The WAN connection is, for example, provided to customers by an internet service provider (ISP). For customers, it is interesting to test on a regular basis in order to check if available quality of service supplied by the provider on a particularly critical link $L_{12}$ connecting two network nodes F1 and F2, is compliant with a negotiated quality of service. Such a "quality of service" is also named "network performance" of link $L_{12}$ in the following.

A main requirement of the network performance test is to have as little impact on the ongoing "normal operation" network traffic as possible.

Here, "normal operation" traffic is a network traffic generated by conventional applications. Conventional applications are defined as applications which run on network nodes F1, F2 and which are not test daemons.

A solution to reach this main requirement consists in performing the performance test during low-activity period on the WAN access link. This low-activity period can be determined on an "a priori" basis, like during night-time where it is reputed to have less activity. The low-activity period can also be detected on basis of direct network activity measurements on the WAN links, but for some business like video-production such a direct measurement method is not well suited due to the high bandwidth consummation of the application in such field of activity. A direct measurement would add traffic over existing traffic and finally perturb the existing traffic.

According to the invention, an apparatus for evaluating network performances during normal operation of the network comprises means for determining a couple $<T_i, L_{jk}>$ where $L_{jk}$ is a link connecting two nodes $N_j, N_k$ and $T_i$ identifies a time period with low traffic on the link $L_{jk}$.

Advantageously, the means for determining a couple $<T_i, L_{jk}>$ comprises:

- means for evaluating network traffic on a link $L_{jk}$;
- means for building statistical characteristics from network traffic evaluations during temporal windows;
- means for storing statistical characteristics;
- means for comparing between network traffic evaluations and stored statistical characteristics;

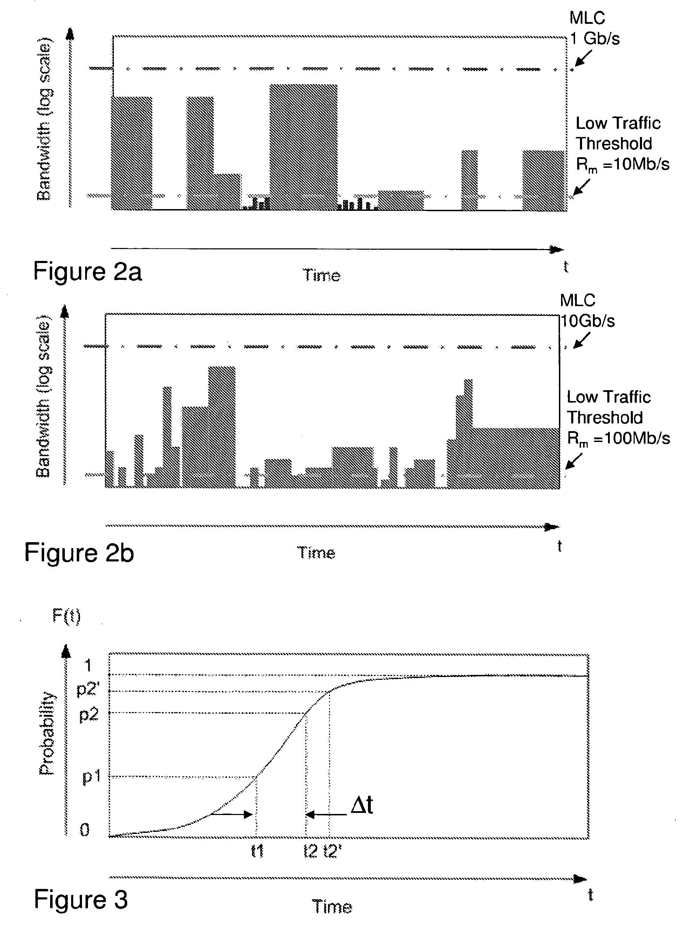

Therefore, the figure 2b represents a temporal evolution of used bandwidth by video-production applications for a classical network between the two nodes F1 and F2. By comparison, equivalent temporal evolution of used bandwidth by applications is shown on figure 2a. It illustrates that a conventional network including conventional applications, like for example remote database access, is much less bandwidth consuming than a a network including video-production applications.

As shown on figure 2b, bandwidth utilisations in a video-production network are characterized by long periods of time at nearly constant high bandwidth utilization levels. This is due to file transfers or real time streaming of high resolution video material. Differences between figures 2a and 2b illustrate that the characteristics of the outgoing and incoming network traffic of a video and film production facilities is really special (also called "bursty").

Therefore, it can be foreseen on statistical considerations made on network traffic parameters, like for example network traffic that is entering and exiting the WAN access link $L_{jk}$. Entering and exiting traffic on link $L_{jk}$ is available from nodes $N_j$ $N_k$.

An on-off model is a means to describe network traffic features. Here "off-time period" or "off-time" means that there is no traffic or almost no traffic within a certain period of time. This notion is linked with a definition of a data rate threshold $DR_m$. If an averaged data rate over a defined period of time is found below $DR_m$, this period of time is considered as "off-time". In the other cases, this period of time is considered as "on-time". The threshold $DR_m$ can be determined empirically or by analytical means.

If the network traffic is monitored over a reasonable long period of time, statistical parameters of the on-time durations and off-time durations can be determined. A cumulative distribution function (CDF) F(t) sketched in Figure 3 depicts exemplarily the probability p that the duration of an off-time period is less than or equal to t. So, with a probability $p_1$, one particular off-time period will have a duration comprised between 0 and $t_1$.

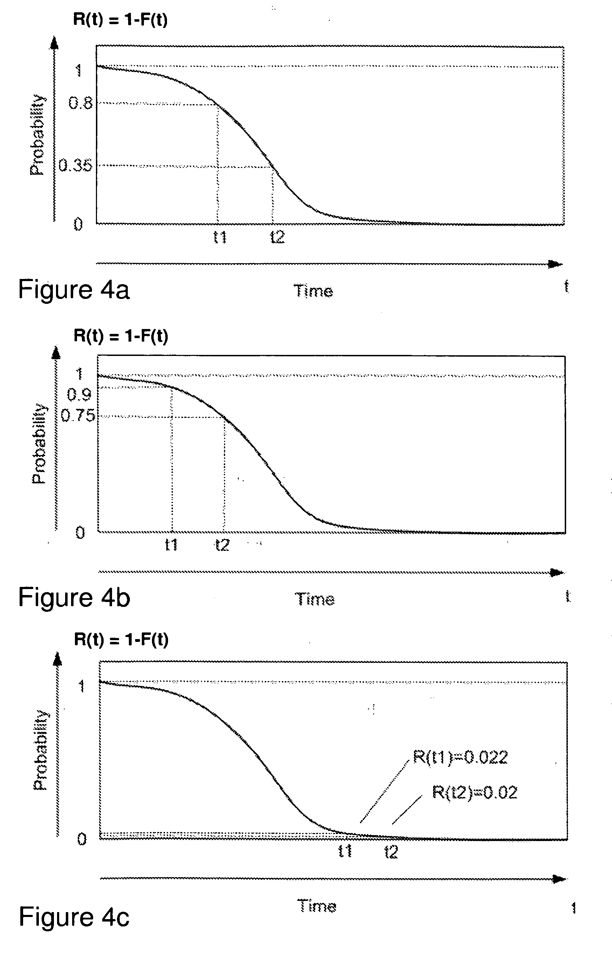

The probability that an off-time period duration is larger than $t_1$ is equal to $1-p_1$. So for each duration t, one can calculate the probability that the off-time duration is larger than the duration t. One example of this function is sketched in Figure 4a. The function R(t) is also called "reliability function".

The proposed method allows finding optimal parameters to start a test period having a duration equal to ·t and defining a tolerable probability for disturbing actual network traffic. The probability of an off-period lasting for ·t after $t_1$ has already elapsed can be calculated according to the conditional reliability function, also called "survival function", as follows:

$$t_2 = t_1 + \cdot t$$

$$R(t) = 1 - F(t)$$

$$R(t + \cdot t|_{T>t}) = R(t + \cdot t) / R(t)$$

With t=$t_1$: R($t_2$|$t_1$) = R($t_2$)/R($t_1$)

By evaluating the corresponding graphs, a working point can be determined that provides a reasonable duration ·t for a performance test while having an acceptable probability of disturbing starting production network traffic. Here follows a numerical illustration which corresponds to Figure 3:

$$t_1 = 1 \ s, \ \cdot t = 10s, \ p_1 = F(t_1) = 0.3, \ p_2 = F(t_2) = 0.6$$

$$t_2 = 11 \ s.$$

$$R(t_2) = (1 - F(t_2)) / (1 - F(t_1))$$

$$R(t_2) = (1 - 0.6) / (1 - 0.3) = 0.57$$

In increasing ·t from 10s to 15s, then p2 becomes p2'=0.8. The other parameter values are kept as before, then with t2'= 16s, R(t2') = 0.2/0.7 = 0.29

Since F is by definition a monotonically increasing function, R must be a monotonically decreasing function.

So, as shown above, the increase of test duration ·t (e.g. from 10 second to 15 seconds) leads finally to a decreased probability of still having a low-traffic period within the test duration ·t (from 0.57 to 0.29).

So, once an off-time has been detected, one can successfully perform performance tests with durations up to ·t with the probability of $R(t_1 + \cdot t)/R(t_1)$. For a t1 value, the constraint for maximum ·t is given by the maximum permitted probability for a collision between the performance measurement duration and the beginning of the "on-time" period. With this knowledge, one can determine duration ·t from a maximum tolerable probability for disturbing production traffic and a starting date $t_1$ for the test period.

To have a low impact on normal operation traffic in the network, a performance test has to be conduct during an off-time period.

One can search the measured probability curves for sets of test starting dates $t_1$ and test durations ·t achieving the desired test success probability, and select the one most appropriate for a specific test, e.g., the smallest possible $t_1$ to start a test. This also results in the probability that a test can be started at all, which is $R(t_1)$.

Three cases shown in Figure 4a, 4b, 4c illustrate the influence of working point position for unique performance test duration. The same shape of R is considered for three different $t_1$ values, keeping the value of $\Delta t = t_2 - t_1$ constant.

In the example shown in figure 4b), the gap of probability has been shortened compared to the gap of the figure 4a. Thereby the probability of launching a test and the ratio R(t2)/R(t1) has increased, for the example probability curve.

In the corresponding to figure 4c, there is a lower probability of launching a test, but also a higher ratio of $R(t_2)$ /$R(t_1)$, the latter leading to a higher probability of having a traffic gap of that certain duration.

Fig. 4a) $R(t_2/R(t_1)$= 0.35/0.8 = 0,438;
Fig. 4b) $R(t_2)/R(t_1)$= 0.75/0.9 = 0.834;
Fig. 4c) $R(t_2)/R(t_1)$= 0.02/0.022 = 0.91.

So, depending on the shape of the curve, an optimal working point can be determined that describes a compromise of all constraints.

If these conditions are monitored at two sides of the test setup and the test daemons at both ends can communicate their own state it is possible to launch performance tests on a regular basis that can verify the quality of service between the two sites. The probability of impacting the ingoing and outgoing network traffic is thereby kept very low.

The function "reliability function" R(t) is determined from statistical characteristics of ongoing traffic on the link $L_{jk}$.

Advantageously, the means for evaluating network traffic on link $L_{jk}$ is located on at least one of the nodes $N_j$, $N_k$.

R(t) is determined by counting the on-times and off-times within a certain period of time. Additionally the duration of each on-time and off-time is monitored within that period. Since each off-time is followed by an on-time and vice-versa the above values can be used to determine the probability of an off-time having a certain duration ending or being continued.

Advantageously, statistical characteristics concern numbers of transmitted packets on the link $L_{jk}$ during temporal windows.

Advantageously, the statistical characteristics are acquired during temporal windows with a fixed duration.

Advantageously, the temporal windows have ending dates which evolute with a current date.

Advantageously, the temporal windows have starting and ending dates which correspond to a fixed date.

## Claims

1. Method for evaluating performance of a network by running tests on network performances during normal operation of said network, the network comprising links connecting nodes, a link $L_{jk}$ connecting a first node $N_j$ to a second node $N_k$, said method comprising:

   - a step of determination of a couple <$T_i$, $L_{jk}$>, $T_i$ identifying an off-time period, with low traffic on the link Ljk, time period over which an averaged data rate is found below a given data rate threshold DRm and
   - a step of measuring network performances by running performance tests on the link $L_{jk}$ during said time period $T_i$,

   the method being **characterized in that**, the determination of the couple <Ti, Ljk> is based on a reliability function (R(t)) providing the probability that an off-time duration is larger than a predetermined duration (t).

2. Method according to claim 1, wherein the reliability function (R(t)) is determined from statistical characteristics acquired during temporal windows with a fixed duration.

3. Method according to claim 2, wherein the temporal windows have a starting date and an ending date which evolve with a current date.

4. Method according to claim 2, wherein the temporal windows have starting and ending dates which correspond to a fixed date.

5. Method according to one of the claims 2 to 4, wherein the statistical characteristics concern numbers of transmitted packets on the link $L_{jk}$ during the temporal window.

6. Method according to claim 1, wherein the determination of the couple $<T_i, L_{jk}>$ is based on achievement of conditions on monitored data.

7. Method according to claims 6, wherein bandwidth reservations on network links is a monitored data.

8. Method according to claim 6, wherein jitter performance on network links is a monitored data.

9. Method according to claim 6, wherein latency performance on network links is a monitored data.

10. Apparatus for evaluating network performances by running tests on network performances during normal operation of the network, the network comprising links connecting nodes, a link $L_{jk}$ connecting a first node $N_j$ to a second node $N_k$, applications running on the first and second nodes Nj, Nk, **characterized in that** the apparatus comprises:

- means for determining a couple $<T_i, L_{jk}>$ where $T_i$ identifies an off-time period with low traffic on the link $L_{jk}$, time period over which an averaged data rate is found below a given data rate threshold DRm, the determination of the couple <Ti, Ljk> being based on a reliability function (R(t)) providing the probability that an off-time duration is larger than a predetermined duration (t); and
- means for measuring network performances by running performance tests on the link $L_{jk}$, during the time period $T_i$.

11. Apparatus according to claim 10, wherein the means for determining a couple $<T_i, L_{jk}>$ comprises :

- means for evaluating network traffic on the link $L_{jk}$;
- means for building statistical characteristics from network traffic evaluations during temporal windows;
- means for storing statistical characteristics;
- means for comparing network traffic evaluations and stored statistical characteristics.

12. Apparatus according to claim 11, wherein the means for evaluating network traffic on link $L_{jk}$ is located on at least one of the first or second nodes $N_j$, $N_k$.

**Patentansprüche**

1. Verfahren zum Bewerten der Leistung eines Netzes durch Ausführen von Tests über Netzleistungen während des normalen Betriebs des Netzes, wobei das Netz Übertragungsstrecken umfasst, die Knoten verbinden, wobei eine Übertragungsstrecke $L_{jk}$ einen ersten Knoten $N_j$ mit einem zweiten Knoten $N_k$ verbindet, wobei das Verfahren umfasst:

- einen Schritt der Bestimmung eines Paars $<T_i, L_{jk}>$, wobei $T_i$ eine Aus-Zeitperiode mit niedrigem Verkehr auf der Übertragungsstrecke Ljk, eine Zeitperiode, über die festgestellt wird, dass eine gemittelte Datenrate unter einem gegebenen Datenschwellenwert DRm liegt, identifiziert, und
- einen Schritt des Messens von Netzleistungen durch Ausführen von Leistungstests an der Übertragungsstrecke $L_{jk}$ während der Zeitperiode $T_i$, wobei das Verfahren **dadurch gekennzeichnet ist, dass** die Bestimmung des Paars <Ti, Ljk> auf einer Zuverlässigkeitsfunktion (R(t)) beruht, die die Wahrscheinlichkeit liefert, dass eine Aus-Zeitdauer größer als eine vorgegebene Dauer (t) ist.

2. Verfahren nach Anspruch 1, bei dem die Zuverlässigkeitsfunktion (R(t)) aus statistischen Eigenschaften bestimmt wird, die während Zeitfenstern mit einer festen Dauer erfasst werden.

3. Verfahren nach Anspruch 2, bei dem die Zeitfenster ein Anfangsdatum und ein Enddatum aufweisen, die sich mit einem gegenwärtigen Datum entwickeln.

4. Verfahren nach Anspruch 2, bei dem die Zeitfenster ein Anfangsdatum und ein Enddatum aufweisen, die einem festen Datum entsprechen.

5. Verfahren nach einem der Ansprüche 2 bis 4, bei dem die statistischen Eigenschaften Anzahlen während des Zeitfensters auf der Übertragungsstrecke $L_{jk}$ übertragener Pakete betreffen.

6. Verfahren nach Anspruch 1, bei dem die Bestimmung des Paars $<T_i, L_{jk}>$ auf dem Erreichen von Bedingungen an überwachte Daten beruht.

7. Verfahren nach Anspruch 6, bei dem die Bandbreitenreservierungen auf Netzübertragungsstrecken überwachte Daten sind.

8. Verfahren nach Anspruch 6, bei dem die Jitter-Leistung auf Netzübertragungsstrecken überwachte Daten sind.

9. Verfahren nach Anspruch 6, bei dem die Latenzzeitleistung auf Netzübertragungsstrecken überwachte Daten sind.

10. Vorrichtung zum Bewerten von Netzleistungen durch Ausführen von Tests an Netzleistungen während des normalen Betriebs des Netzes, wobei das Netz Übertragungsstrecken umfasst, die Knoten verbinden, wobei eine Übertragungsstrecke $L_{jk}$ einen ersten Knoten $N_j$ mit einem zweiten Knoten $N_k$ verbindet, wobei an dem ersten und an dem zweiten Knoten Nj, Nk Anwendungen ausgeführt werden, **dadurch gekennzeichnet, dass** die Vorrichtung umfasst:

- Mittel zum Bestimmen eines Paars $<T_i, L_{jk}>$, wobei $T_i$ eine Aus-Zeitperiode mit niedrigem Verkehr auf der Übertragungsstrecke $L_{jk}$, eine Zeitperiode, über die festgestellt wird, dass eine gemittelte Datenrate unter einem gegebenen Datenratenschwellenwert DRm liegt, identifiziert, wobei die Bestimmung des Paars <Ti, Ljk> auf einer Zuverlässigkeitsfunktion (R(t)) beruht, die die Wahrscheinlichkeit liefert, dass eine Aus-Zeitdauer größer als eine vorgegebene Dauer (t) ist; und
- Mittel zum Messen von Netzleistungen durch Ausführen von Leistungstests an der Übertragungsstrecke $L_{jk}$ während der Zeitperiode $T_i$.

11. Vorrichtung nach Anspruch 10, bei der die Mittel zum Bestimmen einer Paars $<T_i, L_{jk}>$ umfassen:

- Mittel zum Bewerten des Netzverkehrs auf der Übertragungsstrecke $L_{jk}$;
- Mittel zum Aufbauen statistischer Eigenschaften aus Netzverkehrsbewertungen während Zeitfenstern;
- Mittel zum Speichern statistischer Eigenschaften;
- Mittel zum Vergleichen von Netzverkehrsbewertungen und gespeicherten statistischen Eigenschaften.

12. Vorrichtung nach Anspruch 11, bei der sich die Mittel zum Bewerten des Netzverkehrs auf der Übertragungsstrecke $L_{jk}$ an dem ersten und/oder an dem zweiten Knoten $N_j$, $N_k$ befinden.

**Revendications**

1. Procédé d'évaluation de la performance d'un réseau en exécutant des tests de performances du réseau durant le fonctionnement normal dudit réseau, le réseau comprenant des liens connectant des noeuds, un lien $L_{jk}$ connectant un premier noeud $N_j$ à un deuxième noeud $N_k$, ledit procédé comprenant :

- une étape de détermination d'un couple $<T_i, L_{jk}>$, $T_i$ ; identifiant une période de temps d'arrêt, avec un trafic faible sur le lien Ljk, période de temps sur laquelle un débit de données moyen se trouve au-dessous d'un seuil de débit de données DRm donné et
- une étape de mesure des performances du réseau en exécutant des tests de performances sur le lien $L_{jk}$ durant ladite période de temps $T_i$, le procédé étant **caractérisé en ce que** la détermination du couple <Ti, Ljk> est basée sur une fonction de fiabilité (R(t)) fournissant la probabilité qu'une durée de temps d'arrêt soit plus longue qu'une durée prédéterminée (t).

2. Procédé selon la revendication 1, dans lequel la fonction de fiabilité (R(t)) est déterminée à partir de caractéristiques statistiques obtenues durant des fenêtres temporelles avec une durée fixe.

3. Procédé selon la revendication 2, dans lequel les fenêtres temporelles ont une date de début et une date de fin qui évoluent avec une date courante.

4. Procédé selon la revendication 2, dans lequel les fenêtres temporelles ont une date de début et une date de fin qui correspondent à une date fixe.

5. Procédé selon une des revendications 2 à 4, dans lequel les caractéristiques statistiques concernent de nombreux paquets transmis sur le lien $L_{jk}$ durant la fenêtre temporelle.

6. Procédé selon la revendication 1, dans lequel la détermination du couple $<T_i, L_{jk}>$ est basée sur la réalisation de conditions sur des données surveillées.

7. Procédé selon la revendication 6, dans lequel les réservations de la bande passante sur les liens du réseau sont des données surveillées.

8. Procédé selon la revendication 6, dans lequel la performance de la gigue sur les liens du réseau est une donnée surveillée.

9. Procédé selon la revendication 6, dans lequel la performance de latence sur les liens du réseau est une donnée surveillée.

10. Appareil permettant d'évaluer les performances du réseau en exécutant des tests de performances du réseau durant le fonctionnement normal du réseau, le réseau comprenant des liens connectant des noeuds, un lien $L_{jk}$ connectant un premier noeud $N_j$ à un deuxième noeud $N_k$, des applications étant exécutées sur les premier et deuxième noeuds Nj, Nk, **caractérisés en ce que** l'appareil comprend :

    - un moyen de détermination d'un couple $<T_i, L_{jk}>$ où $T_i$ identifie une période de temps d'arrêt avec un trafic faible sur le lien $L_{jk}$, période de temps sur laquelle un débit de données moyen se trouve au-dessous d'un seuil de débit de données DRm donné, la détermination du couple $<T_i, L_{jk}>$ étant basée sur une fonction de fiabilité (R(t)) à condition que la probabilité qu'une durée de temps d'arrêt soit plus longue qu'une durée prédéterminée (t) ; et
    - un moyen de mesure des performances du réseau en exécutant des tests de performances sur le lien $L_{jk}$ durant la période de temps $T_i$.

11. Appareil selon la revendication 1, dans lequel le moyen pour déterminer un couple $<T_i, L_{jk}>$ comprend :

    - un moyen d'évaluation du trafic du réseau sur le lien $L_{jk}$
    - un moyen d'établissement de caractéristiques statistiques à partir des évaluations du trafic du réseau durant les fenêtres temporelles ;
    - un moyen de stockage de caractéristiques statistiques ;
    - un moyen de comparaison des évaluations du trafic du réseau et des caractéristiques statistiques stockées.

12. Appareil selon la revendication 11, dans lequel le moyen d'évaluation du trafic du réseau sur le lien $L_{jk}$ est situé au moins sur l'un des premier ou deuxième noeuds, $N_j$, $N_k$.

Figure 1

Figure 2a

Figure 2b

Figure 3

**R(t) = 1-F(t)**

Figure 4a

**R(t) = 1-F(t)**

Figure 4b

**R(t) = 1-F(t)**

Figure 4c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1748623 A
- US 2006251116 A1